# EUROPEAN PATENT SPECIFICATION

(11) **EP 1 281 544 B1**
(45) Date of publication and mention of the grant of the patent: **02.01.2004**
(21) Application number: 02015072.8
(22) Date of filing: 05.07.2002
(51) Int. Cl.: B60H 1/03

(54) **A heating, ventilation and air-conditioning unit for the passenger compartment of a motor vehicle**
Heiz-, Lüftungseinheit und Klimaanlage für den Fahrgastraum eines Kraftfahrzeuges
Dispositif de chauffage, ventilation et climatisation pour l'habitacle d'un automobile

(30) Priority: 03.08.2001 IT TO20010781
(43) Date of publication of application: 05.02.2003
(73) Proprietor: DENSO THERMAL SYSTEMS S.p.A., 10046 Poirino (Torino) (IT)
(72) Inventor: Pugliese, Vincenzo, 10046 Poirino (Torino) (IT)
(74) Representative: Marchitelli, Mauro

(56) References cited:
- EP-A- 0 846 580
- US-A- 4 459 466
- US-A- 5 211 333
- US-A- 5 279 459

## Description

The present invention relates to a heating, ventilation and air-conditioning unit for the passenger compartment of a motor vehicle.

More specifically, the invention relates to a unit according to the preamble of claim 1, which is known from US-A-5279459. This document discloses a multiple temparature control systems including a plurality of supplemental heat sources downstream from the air conditioner/heater unit which may be controlled to provide extra-heated air to either the driver position or the passenger position.

In addition to a heating, ventilation and air-conditioning unit of this type, some motor vehicles, especially freight vehicles and top of the range motor cars, also have additional heaters such as so-called parking heaters, which enable the passenger compartment to be warmed before the vehicle has been started.

Such extra heaters can be of a type in which a fuel burner directly heats air which is recirculated through the compartment, or of a type which heats a flow of engine cooling fluid which then heats the air in the passenger compartment by means of a heat exchanger.

In either case, extra heaters currently in use include their own electric fan and an electronic control unit which controls their operation by means of one or more sensors.

EP-A-846580 discloses a modular system including a fuel burner which is located in the engine compartment of a vehicle. An air distribution module is located into the passenger area separated from the engine compartment by a bulkhead (6).

Arrangements used in the prior art have the disadvantage of being fairly expensive which is a barrier to their application in motor cars other than luxury ranges.

The object of the present invention is to provide an arrangement which makes it feasible to provide an extra heater both simply and economically in any motor vehicle fitted with a heating, ventilation and air-conditioning unit.

This and other objects are achieved according to the invention by providing a unit according to claim 1.

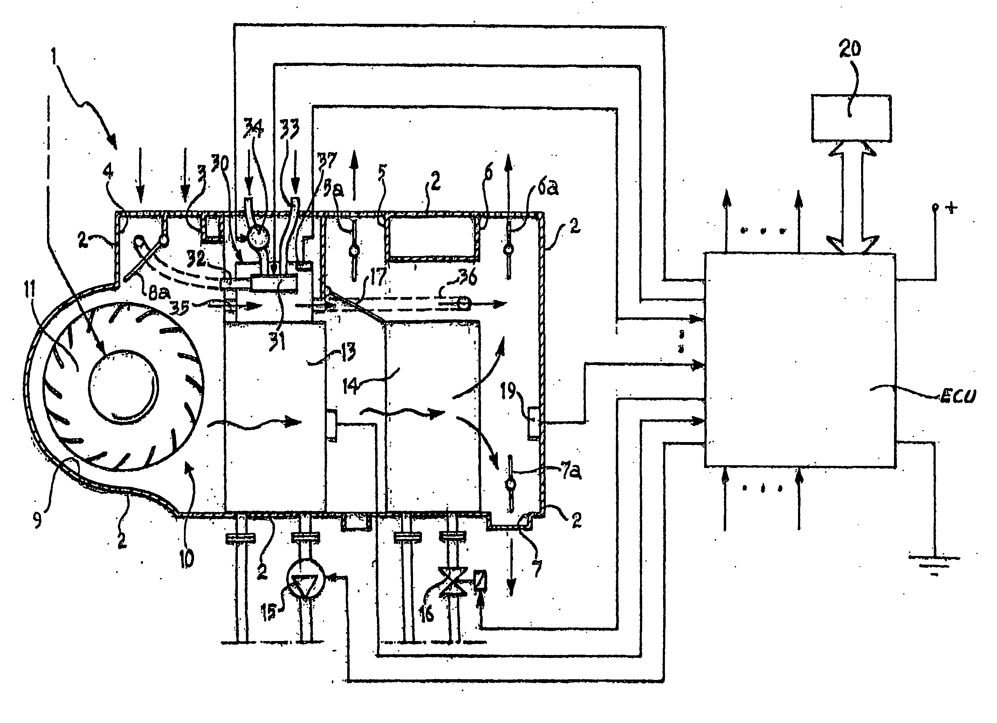

Further characteristics and advantages of the invention will become apparent from the detailed description, provided purely by way of non-limitative example with reference to the appended drawing, which is a schematic illustration of a heating, ventilation and air-conditioning unit according to the invention.

This unit, generally indicated 1 in the drawings, includes a support structure 2 with first and second intakes 3, 4 formed therein for air from respectively inside and outside the passenger compartment of a motor vehicle.

The structure 2 of the unit 1 also has a plurality of outlets 5, 6 and 7 for air treated by the unit to flow into the passenger compartment. In the embodiment illustrated schematically by way of example, the outlet 5 is provided to direct a flow of air towards the inside of the windscreen, the outlet 6 is intended to be connected with a plurality of ventilation nozzles in the upper-middle portion of the compartment, while the outlet 7 is intended to direct a flow of treated air into the bottom portion of the compartment.

Respective flaps, indicated 5a, 6a and 7a, are associated with the outlets 5, 6 and 7 for controlling the flow of air through each outlet.

An additional flap 8a makes it possible selectively to connect either the internal air intake 3 or the external air intake 4 with a region 9 of the structure 2 where an electric fan 10, constituted by rotatable blades 11 and an electric operating motor 12, is arranged.

In operation, the electric fan 10 sets up a flow of air through the structure 2 of the unit 1 between either the intake 3 or the intake 4 and one or more of the outlets 5-7.

First and second heat exchangers, indicated 13 and 14, are arranged in the structure 2 of the unit, downstream of the electric fan 10.

It is convenient if the heat exchanger 13 consists of the evaporator of a cooling unit known per se, which includes a motor-driven compressor 15.

It is also convenient if the heat exchanger 14 is of a liquid/air type, suitable to be fitted into the cooling circuit of the combustion engine of the vehicle in such a way that it is controllable by a solenoid valve 16.

An additional, motor-controlled flap, indicated 17 in the drawing, is also provided, in a position enabling it to control connection of the outlets 5-7 to the evaporator 13 and the heater 14.

An electronic processing and control unit, indicated ECU, is constituted by a microprocessor, for example,

The unit ECU is arranged, in a manner known per se, to control operation of the unit 1 according to predetermined instructions. In particular, this unit is operable to control operation of the electric fan 10, the position of the flaps 8a and 17, operation of the compressor 15 and the solenoid valve 16, all in dependence on signals received from sensors associated with the heating unit, such as temperature sensors 18 and 19 as well as from a control device 20 operable by a user in order to achieve a desired climate in the passenger compartment.

A heating, ventilation and air-conditioning unit 1 also includes an air heater 30, integrated into the support structure 2. This heater comprises a fuel burner 31 and has an intake 32 for combustion air, which is in communication with the intake 4 of the unit, and an outlet for the evacuation of combustion gases. Fuel is fed to the burner 31 by an electric pump 34.

The heater 30 is positioned so that it can warm a flow of air set up by the electric fan 10 and which enters the heater 30 through an intake 35, leaving through an outlet duct 36 which opens upstream of the outlets 5-7.

A temperature sensor, indicated 37, measures the temperature of the air heated by the heater.

The burner 31 and the electric pump 34 supplying the fuel are controlled by the processing and control unit ECU, to which the output of the sensor 37 is also connected.

The electronic unit ECU is also operable to control operation of the heater 30 integrated into the unit 1, in accordance with predetermined instructions and strategies.

A convenient synergy operates in the heating, ventilation and air-conditioning unit described above, since the electric fan 10 and the processing and control unit ECU of the unit 1 are also used to operate the air heater 30.

The arrangement of the invention also offers clear advantages with regard to installation.

By way of example, the drawing shows the heater 30 arranged next to the evaporator 13. This arrangement is not obligatory, however, since the heater could also be arranged next to the heater 14 or in any position within the structure 2 judged to be structurally appropriate.

In a variant of the invention, the heater 30 could be designed so that it could also heat the cooling fluid of the vehicle's internal combustion engine, thereby al so preliminarily warming the said engine as well as heating the passenger compartment, which would be useful in cold weather.

Naturally, the principle of the invention remaining unchanged, embodiments and manufacturing details can be varied widely from those described and illustrated here purely by way of non-limitative example, without departing thereby from the scope of the invention, as claimed in the appended Claims.

## Claims

1. A heating, ventilation and air-conditioning unit for the passenger compartment of a motor vehicle, including
a support structure (2) in which at least first and second intakes (3, 4) are defined for air from inside or outside the passenger compartment respectively, and at least one outlet (5-7) for delivering air treated in the unit (1) into the passenger compartment,
a controlled fan (10), arranged in the structure (2) downstream of the said intakes (3, 4) for setting up a flow of air through the structure (2) between at least one of the intakes (3, 4) and the said at least one outlet (5-7);
first and second heat exchange means (13, 14) arranged in the structure (2) downstream of the fan (10) and operable respectively to cool and heat the flow of air set up by the fan (10); and
an electronic processing and control unit (ECU) connected to sensor devices (18, 19) and to actuator devices (15, 17;...) associated with the unit (1) and also to control means (20) operable by a user and provided to control operation of the unit (1) according to predetermined mode;
the unit (1) being **characterised in that** it also includes an air heater (30), integrated into the support structure (2), including a fuel burner (31) and having an intake (32) for combustion air, in communication with the said second intake (4) of the unit (1) and an outlet (33) for the evacuation of combustion gases; the air heater (30) being positioned so that it can heat a flow of air set up by the said fan (10) between the first intake (3) and the said at least one outlet (5-7) of the unit;
and **in that**
the electronic processing and control unit (ECU) is also connected to the said burner (31) and is arranged to control operation thereof in predetermined modes.

2. A heating, ventilation and air-conditioning unit according to Claim 1, in which the said air heater (30) includes means (34) for supplying fuel to the said burner (31) and in which the processing and control unit (ECU) is arranged to control the said means (34) according to predetermined instructions.

3. A heating, ventilation and air-conditioning unit according to Claims 1 or 2, which also includes temperature measuring means (37) associated with the air heater (30), for measuring the temperature of the heated air, the said temperature measuring means (37) being connected to the processing and control unit (ECU).

4. A heating, ventilation and air-conditioning unit according to any preceding Claim, in which the said heater (30) is also operable to heat the cooling fluid of the internal combustion engine associated with the vehicle.

## Patentansprüche

1. Heizungs-, Lüftungs- und Klimatisierungseinheit für den Fahrgastraum eines Kraftfahrzeugs, die einschließt:
- eine Tragstruktur (2), in der wenigstens eine erste und eine zweite Einlassöffnung (3, 4) für Luft von innerhalb bzw. außerhalb des Fahrgastraums und wenigstens ein Auslass (5-7) zur Beförderung der in der Einheit (1) behandelten Luft in den Fahrgastraum abgegrenzt sind,
- ein gesteuertes Gebläse (10), das stromabwärts von den Einlassöffnungen (3, 4) in der Struktur (2) angeordnet ist, um zwischen wenigstens einer der Einlassöffnungen (3, 4) und dem wenigstens einen Auslass (5-7) einen Luftstrom durch die Struktur (2) hindurch aufzubauen;
- erste und zweite Wärmeaustauschmittel (13, 14), die stromabwärts vom Gebläse (10) in der Struktur (2) angeordnet und betriebsfähig sind, den vom Gebläse (10) aufgebauten Luftstrom jeweils zu kühlen und zu erwärmen; und
- eine elektronische Verarbeitungs- und Steuerungseinheit (ECU), die an Messfühlervorrichtungen (18, 19) und an mit der Einheit (1) verbundene Betätigungsvorrichtungen (15, 17; ...) sowie ferner an Steuermittel (20) angeschlossen ist, die durch einen Benutzer bedienbar und zur Steuerung des Betriebs der Einheit (1) gemäß einer vorbestimmten Betriebsart vorgesehen sind;
wobei die Einheit (1) **dadurch gekennzeichnet ist, dass**
- sie ferner eine in die Tragstruktur (2) eingebaute Luftheizeinrichtung (30) einschließt, die einen Kraftstoffbrenner (31) einschließt und eine Einlassöffnung (32) für Verbrennungsluft in Verbindung mit der zweiten Einlassöffnung (4) der Einheit (1) und einen Auslass. (33) für das Abführen von Verbrennungsgasen aufweist; wobei die Luftheizeinrichtung (30) so angeordnet ist, dass sie einen von dem Gebläse (10) zwischen der ersten Einlassöffnung (3) und dem wenigstens einen Auslass (5-7) der Einheit aufgebauten Luftstrom erwärmen kann; und dass
- die elektronische Verarbeitungs- und Steuerungseinheit (ECU) ferner an den Brenner angeschlossen (31) und zur Steuerung von dessen Betrieb in vorbestimmten Betriebsarten angeordnet ist.

2. Heizungs-, Lüftungs- und Klimatisierungseinheit gemäß Anspruch 1, in der die Luftheizeinrichtung (30) Mittel (34) zur Lieferung von Kraftstoff an den Brenner (31) einschließt und in der die Verarbeitungs- und Steuerungseinheit (ECU) angeordnet ist, um diese Einrichtung (34) gemäß vorbestimmten Befehlen zu steuern.

3. Heizungs-, Lüftungs- und Klimatisierungseinheit gemäß Anspruch 1 oder 2, die ferner ein mit der Luftheizeinrichtung (30) verbundenes Temperaturmessglied (37) zum Messen der Temperatur der erwärmten Luft einschließt, wobei das Temperaturmessglied (37) an die Verarbeitungs- und Steuerungseinheit (ECU) angeschlossen ist.

4. Heizungs-, Lüftungs- und Klimatisierungseinheit gemäß einem beliebigen vorhergehenden Anspruch, in der die Heizeinrichtung (30) ferner zum Erwärmen der Kühlflüssigkeit des mit dem Fahrzeug verbundenen Verbrennungsmotors betriebsfähig ist.

## Revendications

1. Unité de chauffage, de ventilation et de climatisation pour l'habitacle d'un véhicule à moteur, comprenant
une structure support (2) dans laquelle au moins une première et une deuxième entrées (3, 4) sont déterminées pour l'air provenant respectivement de l'intérieur ou de l'extérieur de l'habitacle, et au moins une sortie (5-7) pour alimenter l'habitacle avec l'air traité dans l'unité (1) ,
un ventilateur commandé (10), disposé dans la structure (2), en aval desdites entrées (3, 4) pour la régulation d'un flux d'air passant à travers la structure (2) entre au moins une des entrées (3, 4) et ladite au moins une sortie (5-7) ;
un premier et un deuxième dispositif d'échange de chaleur (13, 14) disposés dans la structure (2), en aval dudit ventilateur (10) et respectivement utilisés pour refroidir et réchauffer le flux d'air délivré par le ventilateur (10) ; et
une centrale de traitement et de contrôle électronique (ECU) connectée aux systèmes capteurs (18, 19) et aux dispositifs de régulation (15, 17 ; ...) associés à l'unité (1) et également aux moyens de contrôle (20) actionnables par un utilisateur et fournis pour les opérations de contrôle de l'unité (1) selon un mode prédéterminé ;
l'unité (1) étant **caractérisée en ce qu'**elle comprend également un réchauffeur d'air (30), intégré dans la structure support (2), comprenant une chambre de combustion de carburant (31) et possédant une entrée (32) pour l'air secondaire, en communication avec ladite seconde entrée (4) de l'unité (1) et une sortie (33) pour l'évacuation des gaz de combustion ; le réchauffeur d'air (30) étant positionné de telle sorte qu'il peut réguler un flux d'air au moyen dudit ventilateur (10), entre la première entrée (3) et ladite au moins une sortie (5-7) de l'unité ;
et dans laquelle la centrale de traitement et de contrôle électronique (ECU) est également connectée à ladite chambre de combustion (31) et est disposée ainsi dans des modes prédéterminés pour contrôler le fonctionnement.

2. Unité de chauffage, de ventilation et de climatisation selon la revendication 1, dans laquelle ledit réchauffeur d'air (30) comprend un dispositif (34) pour alimenter en carburant ladite chambre à combustion (31) et dans laquelle la centrale de traitement et de contrôle (ECU) est disposée afin de contrôler lesdits dispositifs (34) selon des instructions prédéterminées.

3. Unité de chauffage, de ventilation et de climatisation selon les revendications 1 ou 2, qui comprend également un dispositif de mesure de la température (37) associé avec le réchauffeur d'air (30), afin de mesurer la température de l'air chauffé, ledit dispositif de mesure de la température (37) étant connecté à l' unité centrale de traitement et de contrôle (ECU).

4. Unité de chauffage, de ventilation et de climatisation selon l'une quelconque des revendications précédentes, dans laquelle ledit réchauffeur d'air (30) est également capable de chauffer le fluide de refroidissement du moteur à combustion interne associé au véhicule.
